# EUROPÄISCHE PATENTSCHRIFT

(11) **EP 3 192 394 B1**
(45) Veröffentlichungstag und Bekanntmachung des Hinweises auf die Patenterteilung: **30.09.2020**
(21) Anmeldenummer: 16202796.5
(22) Anmeldetag: 08.12.2016
(51) Int. Cl.: A46D 3/05, A46D 9/00, F16J 15/3288, A46B 3/08

(54) **VERFAHREN ZUM HERSTELLEN EINER BÜRSTENDICHTUNG MIT SCHRÄG GESTELLTEN BORSTEN**
METHOD FOR PRODUCING A BRUSH SEAL WITH INCLINED BRISTLES
PROCÉDÉ DE PRODUCTION D'UN JOINT-BROSSE D'ÉTANCHÉITÉ COMPRENANT DES SOIES OBLIQUES

(30) Priorität: 14.01.2016 DE 102016200343
(43) Veröffentlichungstag der Anmeldung: 19.07.2017
(73) Patentinhaber: MTU Aero Engines AG, 80995 München (DE)
(72) Erfinder: Gindorf, Alexander, 85247 Schwabhausen (DE); Bamberg, Joachim, 85221 Dachau (DE); Zenzinger, Günter, 83666 Waakirchen (DE)

(56) Entgegenhaltungen:
- WO-A1-95/31917
- DE-A1- 19 746 184
- DE-A1-102015 221 753
- DE-C1- 19 641 375
- DE-C2- 3 606 284

## Beschreibung

Die Erfindung betrifft ein Verfahren zum Herstellen einer Bürstendichtung mit schräg gestellten Borsten gemäß dem Oberbegriff des Patentanspruchs 1. Weiterhin betrifft die Erfindung eine Vorrichtung zum Herstellen einer Bürstendichtung.

Die Herstellung von Bürstendichtungen mit schräg gestellten Metallborsten ist beispielsweise aus der Druckschrift DE 36 06 284 C2 bekannt. Dabei wird ein metallischer Faden oder Draht über zwei parallel zueinander angeordnete beabstandete Drahtkerne zu einer dichten metallischen Faden- oder Drahtpackung gewickelt. Anschließend wird die metallische Faden- oder Drahtpackung mittels einer Klemmleiste an dem entsprechenden Drahtkern fixiert. Die Klemmleisten und/oder Drahtkerne werden dann bei Raumtemperatur mittels eines Rahmens zueinander parallel verschoben. Dafür sind hohe Kräfte erforderlich. Dabei biegen die Borsten in der Nähe der Drahtkerne ab und ein sogenannter Legewinkel wird erzeugt. Zum Fixieren des Legewinkels der Borsten wird die Bürstendichtung einer anschließenden Wärmebehandlung unterzogen. Dabei wird der Rahmen mit der eingespannten Bürstendichtung in einem Ofen spannungsarm geglüht, beispielsweise eine Stunde lang bei einer Temperatur zwischen 500°C und 1.000°C. Bei diesem Prozess verschleißt der Rahmen und muss regelmäßig ausgetauscht werden. Aufgrund des Verschleißes am Rahmen ist außerdem ein Rollprozess zum Einstellen des korrekten Außendurchmessers der Klemmleiste sowohl vor als auch nach der Wärmebehandlung notwendig.

Aus der deutschen Patentschrift DE 19 641 375 C1 ist ein Verfahren zum Herstellen von ringförmigen Bürstendichtungen mit schräggestellten Borsten bekannt, bei welchem wenigstens eine ringförmige Bürstendichtung mit radial verlaufenden Borsten bereitgestellt wird, die relativ zu einer aufheizbaren Glühwand einer Glühvorrichtung positioniert wird, so dass die freien Borstenenden an der Glühwand anliegen. Daraufhin erfolgt ein Verdrehen der wenigstens einen Bürstendichtung und der aufheizbaren Glühwand relativ gegeneinander, bis die Borsten gegenüber den Radien der ringförmigen Bürstendichtung in deren Ringebene um einen vorgebbaren Winkel schräggestellt sind, ein Aufheizen der Glühwand unter Beibehaltung der Temperatur über eine vorgebbare Zeitspanne, und ein Entfernen der Bürstendichtung von der Glühvorrichtung.

Aus der deutschen Offenlegungsschrift DE 197 46 184 A1 ist ein Verfahren zum Herstellen einer Bürstendichtung bekannt, deren Borsten in einer ringförmig ausgebildeten Fassung befestigt und in Längsrichtung der Fassung um einen Schrägstellungswinkel α zumindest abschnittsweise schräg gestellt sind, gekennzeichnet durchfolgende Schritte: Herstellen eines Bürstenhalbzeugs, das in einer Fassung befestigte Borstenaufweist; Einfahren des Bürstenhalbzeugs in eine Vorrichtung mit einer oder mehreren Führungsflächen, derart, dass sich durch Kontakt der Borsten an den Führungsflächen der gewünschte Schrägstellungswinkel α einstellt; und Fixieren der Borsten, so dass der Schrägstellungswinkel α beständig bleibt.

Aufgabe der vorliegenden Erfindung ist es, ein Verfahren zum Herstellen einer Bürstendichtung mit schräg gestellten Borsten zu schaffen, welches besonders kostengünstig ist. Zudem ist es Aufgabe der Erfindung, eine Vorrichtung zum Herstellen von Bürstendichtungen bereitzustellen. Weiterhin ist es Aufgabe der Erfindung, eine Bürstendichtung mit schräg gestellten Borsten für eine Strömungsmaschine, insbesondere für ein Flugtriebwerk, zur Verfügung zu stellen, welche besonders kostengünstig ist.

Diese Aufgaben werden durch ein Verfahren mit den Merkmalen des Patentanspruchs 1, eine Vorrichtung mit den Merkmalen des Patentanspruchs 9 gelöst. Vorteilhafte Ausgestaltungen mit zweckmäßigen Weiterbildungen der Erfindung sind in den jeweiligen Unteransprüchen angegeben, wobei vorteilhafte Ausgestaltungen des Verfahrens, der Vorrichtung und der Bürstendichtung als jeweils wechselseitig vorteilhafte Ausgestaltungen anzusehen sind.

Ein erster Aspekt der Erfindung betrifft ein Verfahren zum Herstellen einer Bürstendichtung mit schräg gestellten Borsten. Dabei wird ein Bürstenrohling mit mindestens einer an oder in mindestens einem Drahtkern befestigten metallischen Faden- oder Drahtpackung bereitgestellt. Der Drahtkern und/oder ein an den Drahtkern angrenzender Teilbereich der Faden- oder Drahtpackung werden zumindest teilweise lokal aufgewärmt. Die Faden- oder Drahtpackung wird relativ zu dem Drahtkern zum Erzeugen der Schrägstellung der Borsten der Bürstendichtung verbogen. Durch dieses Verbiegen wird der sogenannte Legewinkel der Bürstendichtung eingestellt. Durch das lokale Aufwärmen wird die Bürstendichtung spannungsarm geglüht. Durch das Verbiegen aufgebaute innere Spannungen in der Faden- oder Drahtpackung werden so reduziert. Dadurch behält die Bürstendichtung ihren Legewinkel nach dem Verbiegen bei. Das Verbiegen wird auch als Verformen bezeichnet.

Erfindungsgemäß ist es dabei vorgesehen, dass der Drahtkern und/oder der an den Drahtkern angrenzende Teilbereich der Faden- oder Drahtpackung zumindest teilweise konduktiv mittels eines Stromflusses durch den Drahtkern lokal erwärmt wird. Es wird also beispielsweise durch ein Kontaktieren mit einer Spannungsquelle und/oder Stromquelle ein Stromfluss durch wenigstens einen Teilbereich des Drahtkerns bewirkt. Dafür ist der Drahtkern elektrisch leitfähig ausgebildet, beispielsweise aus einem Metallwerkstoff. Das lokale Aufwärmen wird also nach dem Prinzip einer Widerstandsheizung bewirkt. Das lokale konduktive Aufwärmen ist dabei besonders schnell und weist einen hohen Wirkungsgrad auf. Der Drahtkern kann so lokal beispielsweise innerhalb weniger Sekunden bis zum Glühen erwärmt werden. Im Gegensatz zu beispielsweise einer induktiven lokalen Aufwärmung kann dabei auf aufwendige Steuereinrichtungen und/oder Elektronik verzichtet werden. Ebenso ist es nicht notwendig, jeweilige Induktionsspulen in einer Heizeinrichtung vorzusehen. Stattdessen sind beispielsweise lediglich simple elektrische Kontaktelemente notwendig.

Die Faden- oder Drahtpackung besteht aus dem Borstenmaterial und kann auch als Borstenpackung bezeichnet werden. Bei der fertigen Bürstendichtung bildet sie deren Borsten. Bei dem Verbiegen wird üblicherweise ein außerhalb des Drahtkerns befindlicher Teilbereich der Faden- oder Drahtpackung relativ zu einem in oder an dem Drahtkern befestigten Teilbereich der Faden- oder Drahtpackung zum Erzeugen der Schrägstellung der Borsten der Bürstendichtung verbogen. Das Aufwärmen kann auch als Aufheizen oder Erwärmen bezeichnet werden. Mittels des lokalen konduktiven Aufwärmens wird die Faden- oder Drahtpackung zumindest an einer Biegestelle lokal spannungsarm geglüht.

Vorzugsweise wird das Aufwärmen unmittelbar vor dem Verbiegen vorgenommen, sodass besonders geringe Kräfte zum Verbiegen des aufgrund seiner aufgewärmten Temperatur weichen Materials der Faden- oder Drahtpackung notwendig sind. Durch das lokale Aufwärmen kann auf ein energieintensives Aufwärmen der gesamten Bürstendichtung in einem Ofen verzichtet werden. Dabei wird auch eine Haltevorrichtung beispielsweise in Form eines Rahmens nicht oder nur geringfügig durch Wärmeleitung von dem Drahtkern und/oder der Faden- oder Drahtpackung aufgewärmt. Dadurch ist wesentlich weniger Energie zum Aufwärmen notwendig und die Bürstendichtung kann so besonders kostengünstig und schnell hergestellt werden. Außerdem verschleißt so eine Haltevorrichtung zum Halten und/oder Verbiegen der Faden- und Drahtpackung während des Aufwärmens kaum oder gar nicht.

In weiterer vorteilhafter Ausgestaltung des erfindungsgemäßen Verfahrens ist es vorgesehen, dass zum lokalen Aufwärmen zwei Pole einer Stromquelle an zwei voneinander beabstandeten Stellen mit dem Drahtkern und/oder mit der Faden- oder Drahtpackung mittels jeweiliger Kontaktelemente elektrisch kontaktiert werden. Mittels der zwei Kontaktelemente und deren Kontaktposition an dem Bürstenrohling kann ein Pfad des Stromflusses durch den Bürstenrohling bestimmt werden. In Abhängigkeit dieses Pfades des Stromflusses wird der Bürstenrohling lokal konduktiv erwärmt. Dadurch können bei dem lokalen Aufwärmen bestimmte Teilbereiche besonders stark erhitzt werden und andere Teilbereiche kaum oder gar nicht. Die Kontaktelemente können beispielsweise als metallische Klemmen ausgebildet sein. Die Kontaktelemente können alternativ beispielsweise auch als simple Metallstifte ausgebildet sein, welche an bestimmten Stellen des Bürstenrohlings mit diesem in Kontakt gebracht werden.

In weiterer vorteilhafter Ausgestaltung des erfindungsgemäßen Verfahrens ist es vorgesehen, dass zum lokalen konduktiven Aufwärmen ein Wechselstrom und/oder ein Gleichstrom genutzt wird. Bei der Verwendung von Gleichstrom kann eine komplette Durchwärmung zumindest von stromdurchflossenen Bereichen bewirkt werden. Bei dem Einsatz von Wechselstrom kann die Eindringtiefe bei der lokalen Erwärmung gesteuert werden, was auch als Modulation der Eindringtiefe bezeichnet wird.

In weiterer vorteilhafter Ausgestaltung des erfindungsgemäßen Verfahrens ist es vorgesehen, dass zum Verbiegen der Faden- oder Drahtpackung der Drahtkern mittels einer ersten Halteeinrichtung gehalten wird und ein von dem Drahtkern beabstandeter Teilbereich der Faden- oder Drahtpackung mittels einer zweiten Halteeinrichtung gehalten wird, wobei diese beiden Halteeinrichtungen zum Erzeugen der Schrägstellung der Borsten relativ zueinander verschoben und/oder verdreht werden. Die Faden- oder Drahtpackung und/oder der Drahtkern können dazu insbesondere in den jeweiligen Halteeinrichtungen eingespannt werden. Durch das Verschieben und/oder Verdrehen zueinander kann besonders einfach ein bestimmter Legewinkel eingestellt werden. Vorzugsweise werden dabei jeweilige elektrische Kontaktelemente so mit der Faden- oder Drahtpackung und/oder dem Drahtkern kontaktiert, dass deren Kontakt durch das Verschieben und/oder Verdrehen der Halteeinrichtung nicht unterbrochen wird. Dafür können jeweilige Kontaktelemente mit den Halteeinrichtungen mitbewegt werden.

In weiterer vorteilhafter Ausgestaltung des erfindungsgemäßen Verfahrens ist es vorgesehen, dass als Bürstenrohling ein Rohling bereitgestellt wird, bei welchem die metallische Faden- oder Drahtpackung mit zwei gegenüberliegenden Endbereichen in oder an jeweils einen Drahtkern befestigt ist, wobei zum Verbiegen der Faden- oder Drahtpackung die Drahtkerne des Bürstenrohlings jeweils mittels einer Halteeinrichtung gehalten werden und die jeweiligen Halteeinrichtungen zum Erzeugen der Schrägstellung der Borsten relativ zueinander verschoben und/oder verdreht werden. Dadurch können bei einem einzigen Biegevorgang zwei Bürstendichtungen hergestellt werden.

In weiterer vorteilhafter Ausgestaltung des erfindungsgemäßen Verfahrens ist es vorgesehen, dass nach dem Verbiegen die Faden- oder Drahtpackung zwischen den beiden Drahtkernen durchtrennt wird. Dadurch können besonders einfach zwei Bürstendichtungen aus einer einzigen Faden- oder Drahtpackung hergestellt werden. Das Durchtrennen kann dabei vor oder nach dem lokalen konduktiven Aufwärmen erfolgen. Das Durchtrennen kann aber auch während des lokalen konduktiven Aufwärmens erfolgen.

In weiterer vorteilhafter Ausgestaltung des erfindungsgemäßen Verfahrens ist es vorgesehen, dass beim konduktiven lokalen Aufwärmen des Drahtkerns der an den Drahtkern angrenzende Teilbereich der Faden- oder Drahtpackung mittels Wärmeleitung vom Drahtkern erwärmt wird. In diesem Fall kann beispielsweise nur der Drahtkern lokal konduktiv mittels Stromfluss erwärmt werden. Diese Erwärmung kann dann besonders gut eingestellt werden, da der Drahtkern eine definierte Geometrie aufweist. Die Faden- oder Drahtpackung kann dagegen aufgrund unregelmäßig verteilter Fäden und/oder Drähte mittels eines Stromflusses gegebenenfalls nur unregelmäßig erwärmt werden. Eine eigentliche Biegestelle der Faden- oder Drahtpackung wird somit sekundär durch Wärmeleitung erwärmt. Insbesondere die Biegestelle und/oder Austrittsstelle der Faden- oder Drahtpackung aus dem Drahtkern kann trotzdem zusätzlich direkt mittels eines Stromflusses durch diese hindurch konduktiv lokal erwärmt werden, um eine besonders schnelle Aufheizung dieses Bereichs der Faden- oder Drahtpackung zu erreichen.

In weiterer vorteilhafter Ausgestaltung des erfindungsgemäßen Verfahrens ist es vorgesehen, dass der Drahtkern als C-förmiges Element, insbesondere als C-Rohr, bereitgestellt wird und die Faden- oder Drahtpackung zumindest am Austritt aus dem C-Rohr konduktiv und/oder durch Wärmeleitung erwärmt wird. Dadurch kann die Erwärmung sehr schnell und mit geringer Haltezeit erfolgen, bei deutlich reduzierten Kräften zur Herstellung des Legewinkels. Hauptunterschied zu einer globalen Wärmebehandlung ist die Erwärmung der C-Rohre und jeweiliger Kerndrahte per Konduktion mittels des Prinzips einer Widerstandsheizung. Die Erwärmung der Bürstendrähte erfolgt dabei lokal durch Stromfluss und/oder Wärmeleitung an der Stelle des Austritts aus dem C-Rohr.

Ein zweiter Aspekt der Erfindung betrifft eine Vorrichtung zum Herstellen einer Bürstendichtung mit schräg gestellten Borsten. Erfindungsgemäß wird die Bürstendichtung aus einem Bürstenrohling mit wenigstens einem Drahtkern und mit wenigstens einer in oder an dem Drahtkern befestigten Faden- oder Drahtpackung hergestellt, wobei die Vorrichtung mindestens eine Biegeeinrichtung zum Verbiegen der Faden- oder Drahtpackung relativ zu dem Drahtkern und mindestens eine Heizeinrichtung zum lokalen konduktiven, zumindest teilweisen Aufwärmen des Drahtkerns und/oder wenigstens eines an den Drahtkern angrenzenden Teilbereichs der Faden- oder Drahtpackung mittels eines Stromflusses umfasst. Die Vorrichtung gemäß dem zweiten Erfindungsaspekt eignet sich also zur Durchführung des Herstellverfahrens gemäß dem ersten Erfindungsaspekt. Die sich aus der Verwendung des Verfahrens gemäß dem ersten Erfindungsaspekt ergebenden Merkmale und Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

Die Biegeeinrichtung kann beispielsweise den Bürstenrohling einspannen. Insbesondere kann die Biegeeinrichtung jeweilige Halteeinrichtungen umfassen, welche relativ zueinander verschieb- und/oder verdrehbar sind. Die Heizeinrichtung kann beispielsweise eine Stromquelle und/oder Spannungsquelle zum Erzeugen eines Wechselstroms oder eines Gleichstroms umfassen. Alternativ kann die Heizeinrichtung beispielsweise auch einen Transformator umfassen, mittels welchem eine von einem Stromnetz zur Verfügung gestellte Stromversorgung in eine geeignete Spannung und/oder Stromart transformiert werden kann.

In weiterer vorteilhafter Ausgestaltung der erfindungsgemäßen Vorrichtung ist es vorgesehen, dass die Biegeeinrichtung jeweilige keramische Befestigungselemente zum Halten von Drahtkernen und/oder Faden- oder Drahtpackungen des Bürstenrohlings umfasst. Die Befestigungselemente können dabei Teile der relativ zueinander bewegbaren Halteeinrichtungen sein. Durch die Verwendung von keramischen Befestigungselementen kommt es zu keinem oder nur einem besonders geringen Verschleiß der Biegeeinrichtung aufgrund des lokalen konduktiven Aufwärmens. Im Gegensatz zu einem globalen Aufwärmen in einem Ofen kommt es so nicht zu einem großen Verschleiß eines Rahmens zum Halten des Bürstenrohlings aufgrund des Erwärmens, welcher dann regelmäßig ausgetauscht werden muss. Dafür kann insbesondere eine hochwarmfeste Keramik eingesetzt werden, beispielsweise eine Glaskeramik wie Ni3N4. Die Befestigungselemente können beispielsweise als Klemmbacken ausgebildet sein. Insbesondere können sich die Befestigungselemente über eine gesamte Längserstreckung der Drahtkerne und/oder der Faden- oder Drahtpackung erstrecken, um den Bürstenrohling besonders gut einspannen zu können.

In weiterer vorteilhafter Ausgestaltung der erfindungsgemäßen Vorrichtung ist es vorgesehen, dass die jeweiligen Befestigungselemente der Biegeeinrichtung entlang einer Führung relativ zueinander verschiebbar und/oder verdrehbar sind. Dadurch kann der Legewinkel der Bürstendichtung besonders genau eingestellt werden.

In weiterer vorteilhafter Ausgestaltung der erfindungsgemäßen Vorrichtung ist es vorgesehen, dass die Heizeinrichtung wenigstens zwei Kontaktelemente zum elektrischen Kontaktieren einer Stromquelle mit dem wenigstens einen Drahtkern umfasst. Dadurch kann besonders einfach ein Pfad des Stromflusses durch den Drahtkern festgelegt werden. Als Kontaktelemente können so sehr einfache Teile wie beispielsweise Metallstifte eingesetzt werden. Alternativ kann es auch vorgesehen sein, dass eines der Kontaktelemente oder beide Kontaktelemente mit der Faden- oder Drahtpackung kontaktiert werden. Die Kontaktelemente sind dann entsprechend für eine Kontaktierung mit der Faden- oder Drahtpackung ausgebildet. Wird als Bürstenrohling ein Bürstenrohling mit zwei Drahtkernen und einer dazwischen eingespannten Faden- oder Drahtpackung eingesetzt, kann die Heizeinrichtung pro Drahtkern zwei Kontaktelemente umfassen. Dann kann die Faden- oder Drahtpackung lokal an beiden Biegestellen gleichzeitig konduktiv aufgewärmt werden.

In weiterer vorteilhafter Ausgestaltung der erfindungsgemäßen Vorrichtung ist es vorgesehen, dass die Heizeinrichtung und die Biegeeinrichtung als voneinander funktional unabhängige Einrichtungen ausgebildet sind. Das kann heißen, dass die Heizeinrichtung und die Biegeeinrichtung unabhängig voneinander benutzbar sind. Die Biegeeinrichtung kann die Faden- oder Drahtpackung verbiegen, ohne dass die Heizeinrichtung mit dem Bürstenrohling kontaktiert sein muss. Ebenso kann die Heizeinrichtung mit dem Bürstenrohling unabhängig von der Biegeeinrichtung kontaktiert werden. Ebenso kann die funktionale Unabhängigkeit bedeuten, dass eine Wartung der beiden Einrichtungen unabhängig voneinander erfolgen kann. Beispielsweise können jeweilige Kontaktelemente der Heizeinrichtung ausgetauscht werden, ohne dass jeweilige Befestigungselemente der Biegeeinrichtung ausgetauscht werden müssen. Die funktionelle Unabhängigkeit der beiden Einrichtungen muss jedoch nicht bedeuten, dass diese nicht aneinander befestigt sein dürfen. Beispielsweise können jeweilige Kontaktelemente der Heizeinrichtung zum Kontaktieren mit dem Bürstenrohling an der Biegeeinrichtung, insbesondere deren Befestigungsbacken, befestigt werden. So können sich die Kontaktelemente beim Verbiegen mit den Befestigungsbacken mitbewegen und in Kontakt mit dem Bürstenrohling bleiben.

Die Bürstendichtung ist dabei besonders kostengünstig, da das Verfahren zu deren Herstellung besonders effizient und kostengünstig ist. Insbesondere ist das Verfahren gemäß dem ersten Erfindungsaspekt kostengünstiger und einfacher als ein Herstellungsverfahren, bei welchem der Bürstenrohling global aufgewärmt wird oder bei welchem der Bürstenrohling lokal induktiv aufgewärmt wird. Ebenso ist die Vorrichtung zur Herstellung gemäß dem zweiten Erfindungsaspekt kostengünstiger als eine Vorrichtung, welche ein globales Aufwärmen des Bürstenrohlings vorsieht oder ein lokales induktives Aufwärmen.

Weitere Vorteile, Merkmale und Einzelheiten der Erfindung ergeben sich aus der nachfolgenden Beschreibung eines bevorzugten Ausführungsbeispiels sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.
- Fig. 1: veranschaulicht in einer Perspektivansicht ein lokales, konduktives Aufwärmen eines Drahtkerns; und
- Fig. 2: zeigt in einer schematischen Perspektivansicht ausschnittsweise eine Vorrichtung zum Herstellen einer Bürstendichtung mit schräg gestellten Borsten.

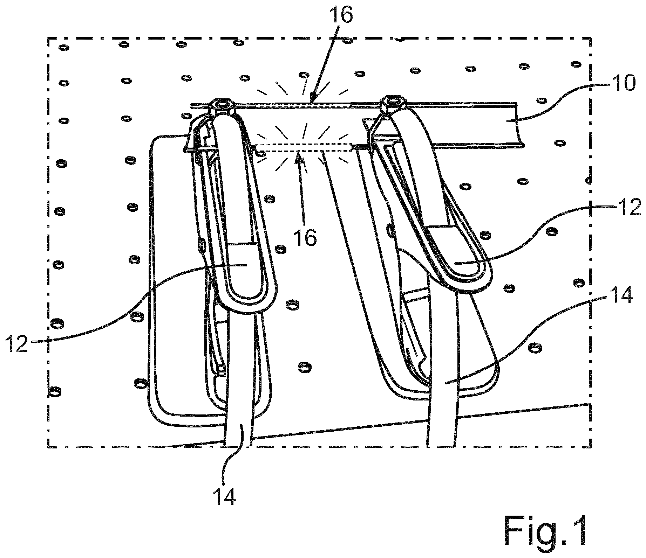

Fig. 1 zeigt in einer schematischen Perspektivansicht ein lokales, konduktives Aufwärmen eines Drahtkerns 10 einer Bürstendichtung. Dieser Drahtkern 10 ist an zwei voneinander beabstandeten Stellen mittels jeweiliger Kontaktelemente 12 elektrisch jeweils mit einem Pol einer Stromquelle kontaktiert. Die Kontaktelemente 12 sind dabei beispielsweise als metallische Klammern ausgebildet, welche mittels jeweiliger Stromkabel 14 mit einer nicht gezeigten Stromquelle verbunden sind. Über diese Kontaktelemente 12 fließt durch den Drahtkern 10 zwischen den Kontaktelementen 12 ein von der Stromquelle erzeugter Gleichstrom. Dadurch wird der Drahtkern 10 lokal zwischen den beiden Kontaktelementen 12 lokal entlang eines Pfads des Stromflusses konduktiv erhitzt.

Diese lokale konduktive Aufwärmung erfolgt dabei nach dem Prinzip einer Widerstandsheizung. Dabei ist zu erkennen, dass der Drahtkern 10 nur in den beiden Teilbereichen 16 bis zum Glühen lokal durch den Stromfluss erhitzt wird. Das lokale Aufwärmen erfolgt also im Wesentlichen nur in solchen Bereichen des Drahtkerns 10, welche auch von dem Strom durchflossen sind. Die Teilbereiche 16 des Drahtkerns 10 können so innerhalb weniger Sekunden bis zu einer Temperatur von 500°C bis 1000°C erhitzt werden. Angrenzende Bereiche des Drahtkerns 10 heizen sich lediglich durch Wärmeleitung von diesen Teilbereichen 16 geringfügig auf.

Der Wirkungsgrad einer solchen lokalen konduktiven Aufheizung ist besonders groß. Im Gegensatz zu einer globalen Aufwärmung in einem Ofen muss nämlich keine Ofenkammer vorgeheizt werden. Für ein Spannungsarmglühen von Bürstendichtungen nicht zu erhitzende Teilbereiche des Drahtkerns 10 und einer Vorrichtung zum Halten des Drahtkerns 10 werden nicht direkt mit aufgewärmt. Im Gegensatz zu einer lokalen induktiven Aufheizung sind keine aufwendigen Steuereinrichtungen und/oder Induktionsspulen notwendig. Die Kontaktelemente 12 sind als preiswerte Standardbauteile verfügbar.

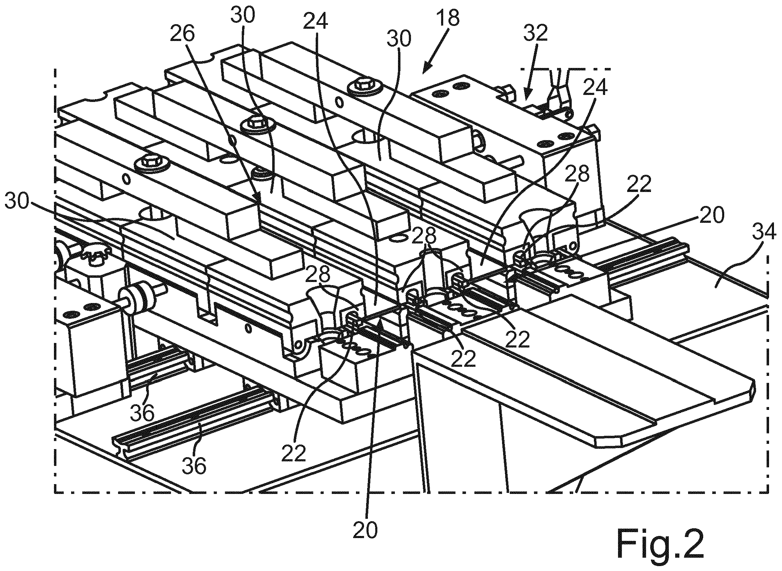

Fig. 2 zeigt ein einer schematischen Perspektivansicht ausschnittsweise eine Vorrichtung 18 zum Herstellen einer Bürstendichtung mit schräg gestellten Borsten für beispielsweise ein Flugtriebwerk. Die Bürstendichtung wird dabei aus einem Bürstenrohling 20 hergestellt, welcher zwei Drahtkerne 22 und eine zwischen diesen zwei Drahtkernen 22 aufgewickelte metallische Faden- oder Drahtpackung 24 umfasst. Der Drahtkern 22 ist aus einem Material gebildet, welches sich bei Stromdurchfluss nach dem Prinzip einer Widerstandsheizung aufwärmt. Der Drahtkern 22 besteht in dem dargestellten Ausführungsbeispiel aus einem metallischen Werkstoff. Der Drahtkern 22 kann auch identisch zu dem in Fig. 1 gezeigten Drahtkern 10 ausgebildet sein.

Für das Herstellen der Bürstendichtung werden die Drahtkerne 22 und/oder jeweilige an die Drahtkerne 22 angrenzende Teilbereiche der Faden- oder Drahtpackung 24 lokal zumindest teilweise konduktiv aufgewärmt. Das zugrundeliegende konduktive Aufwärmprinzip wurde bereits anhand Fig. 1 erläutert. Anschließend wird die Faden- oder Drahtpackung 24 relativ zu den Drahtkernen 22 zum Erzeugen einer Schrägstellung der Borsten der Bürstendichtung verbogen. Dadurch kann ein sogenannter Legewinkel der Borsten der herzustellenden Bürstendichtung eingestellt werden. Anschließend wird die Faden- oder Drahtpackung 24 beispielsweise in der Mitte zwischen den beiden Drahtkernen 22 durchtrennt, wodurch zwei Bürstendichtungen gleichzeitig hergestellt werden können.

Für diese Herstellung umfasst die Vorrichtung 18 mindestens eine Biegeeinrichtung 26 zum Verbiegen der Faden- oder Drahtpackung 24 relativ zu dem Drahtkern 22. Die Biegeeinrichtung 26 umfasst dabei jeweilige keramische Befestigungselemente 28, welche als Klemmbacken ausgebildet sind. In den Klemmbacken sind die Drahtkerne 22 eingespannt. Die Befestigungselemente 28 bestehen aus einer hochwarmfesten Glaskeramik, wie Ni3N4, und sich über eine gesamte Länge der Drahtkerne 22 angeordnet. Die Befestigungselemente 28 sind dabei jeweils an einer Führung 30 gehalten, um bewegt werden zu können. Durch deren Bewegung erfolgt das Verbiegen der Faden- oder Drahtpackung 24. Die Führungen 30 erlauben ein relatives transversales Verschieben der Befestigungselemente 28 in eine Ebene, welche einer Haupterstreckung der Faden- oder Drahtpackung 24 entspricht.

Weiterhin umfasst die Vorrichtung 18 eine Heizeinrichtung 32 zum lokalen konduktiven, zumindest teilweisen Aufwärmen der Drahtkerne 22 und/oder der an die Drahtkerne 22 angrenzenden Teilbereiche der Faden- oder Drahtpackung 24 mittels eines Stromflusses. Die jeweiligen Kontaktelemente der Heizeinrichtung 32 selbst sind in der Fig. 2 nicht dargestellt. Beispielsweise können die Kontaktelemente als metallische Stifte ausgebildet sein, welche durch Öffnungen in den Führungen 30 mit dem Drahtkern 22 und/oder die an den Drahtkern 22 angrenzenden Teilbereiche der Faden- oder Drahtpackung 24 in Kontakt gebracht werden können. Zudem umfasst die Heizeinrichtung 32 eine ebenfalls nicht gezeigte Stromquelle. Mittels dieser Stromquelle wird zum lokalen konduktiven Aufwärmen ein Gleichstrom erzeugt. Mittels des Gleichstroms kann ein kompletter Teilbereich der Drahtkerne 22, welche von Strom durchflossen ist, aufgeheizt werden. Alternativ kann mittels der Stromquelle auch ein Wechselstrom zur Verfügung gestellt werden, wodurch eine Eindringtiefe der lokalen konduktiven Aufwärmung modulierbar ist.

Bei der Vorrichtung 18 liegt eine funktionale Trennung einer Einspannung des Bürstenrohlings 20 und dessen lokaler konduktiver Erwärmung vor. Dadurch ist es möglich, jeweilige keramische Befestigungselemente 28 mit einer an die Drahtkerne 22, an die Faden- oder Drahtpackung 24 und/oder an den Bürstenrohling 20 angepassten Form zu verwenden. Jeweilige Kontakte für eine Stromeinkopplung sind nicht Teil der Einspannung der Bürstenrohlinge 20. Dadurch können die Biegeeinrichtung 26 und die Heizeinrichtung 32 unabhängig voneinander gewartet werden. Insbesondere können jeweilige Teile unabhängig voneinander ausgetauscht werden.

Mittels der Vorrichtung 18 gemäß dem Ausführungsbeispiel können vier Bürstendichtungen mit schräg gestellten Borsten gleichzeitig hergestellt werden. Dafür müssen zwei Bürstenrohlinge 20 mit jeweils zwei Drahtkernen 22 und einer Faden- oder Drahtpackung 24 bereitgestellt werden. Die mittlere Einspannung der Vorrichtung 18 kann dabei zwei Drahtkerne 22 von zwei unterschiedlichen Bürstenrohlingen 20 gleichzeitig einspannen.

Des Weiteren erkennt man, dass die Vorrichtung 18 zum Herstellen der Bürstendichtung mittels mehrerer Schienen 36 auf einem Arbeitstisch 34 gelagert ist. Durch diese Lagerung der Führungen 30 auf den Schienen 36 kann deren Abstand zueinander adjustiert werden. Dadurch können Bürstenrohlinge 20 mit unterschiedlich langen Faden- oder Drahtpackungen 24 bearbeitet werden und Bürstendichtungen mit unterschiedlich langen Borsten hergestellt werden. Mittels der Vorrichtung 18 können jeweilige Bürstendichtungen beziehungsweise Bürstenrohlinge 20 direkt am Ort ihrer Verformung beziehungsweise Verbiegung spannungsarm geglüht werden. Dadurch können jeweilige Durchlaufzeiten beim Herstellen von Bürstendichtungen mit schräg gestellten Borsten wesentlich reduziert werden. Die keramischen Befestigungselemente 28 sind aufgrund der eingesetzten Glaskeramik verschleißarm.

Die Faden- oder Drahtpackung 24 beziehungsweise die Borsten der Bürstendichtung sind an den Drahtkernen 22 des Bürstenrohlings 20 mittels jeweiliger nicht im Detail dargestellter Klemmleisten fixiert. Dafür werden jeweilige Klemmleisten über die Drahtkerne 22 geschoben. Die Klemmleisten können dabei sowohl vor als auch nach dem Verbiegen und auch vor oder nach der Wärmebehandlung angebracht werden. Die Drahtkerne 22 können beispielsweise als C-förmige Rohre ausgebildet sein. Die Faden- oder Drahtpackung 24 wird dabei sowohl sekundär durch Wärmeleitung von dem lokal konduktiv aufgeheizten Drahtkern 22 an ihrer Austrittsstelle aus dem Drahtkern 22 beziehungsweise dem C-Rohr als auch direkt, indem die Faden- oder Drahtpackung 24 lokal an der Austrittsstelle ebenfalls von Strom durchflossen ist.
- 10: Drahtkern
- 12: Kontaktelement
- 14: Stromkabel
- 16: Teilbereich
- 18: Vorrichtung
- 20: Bürstenrohling
- 22: Drahtkern
- 24: Faden- oder Drahtpackung
- 26: Biegeeinrichtung
- 28: Befestigungselement
- 30: Führung
- 32: Heizeinrichtung
- 34: Arbeitstisch
- 36: Schiene

## Patentansprüche

1. Verfahren zum Herstellen von einer Bürstendichtung mit schräg gestellten Borsten, umfassend zumindest die Schritte:
- Bereitstellen eines Bürstenrohlings (20) mit mindestens einer an oder in mindestens einem Drahtkern (22) befestigten metallischen Faden- oder Drahtpackung (24);
- Lokales zumindest teilweises Aufwärmen wenigstens des Drahtkerns (22) und/oder eines an den Drahtkern (22) angrenzenden Teilbereichs (16) der Faden- oder Drahtpackung (24);
- Verbiegen der Faden- oder Drahtpackung (24) relativ zu dem Drahtkern (22) zum Erzeugen der Schrägstellung der Borsten der Bürstendichtung,
**gekennzeichnet, dadurch dass**
der Drahtkern (22) und/oder der an den Drahtkern (22) angrenzende Teilbereich (16) der Faden- oder Drahtpackung (24) zumindest teilweise konduktiv mittels eines Stromflusses durch den Drahtkern (22) lokal erwärmt wird.

2. Verfahren nach Anspruch 1,
**dadurch gekennzeichnet, dass**
zum lokalen Aufwärmen zwei Pole einer Stromquelle an zwei voneinander beabstandeten Stellen mit dem Drahtkern (22) und/oder mit der Faden- oder Drahtpackung (24) mittels jeweiliger Kontaktelemente (12) elektrisch kontaktiert werden.

3. Verfahren nach einem der Ansprüche 1 oder 2,
**dadurch gekennzeichnet, dass**
zum lokalen konduktiven Aufwärmen ein Wechselstrom und/oder ein Gleichstrom genutzt wird.

4. Verfahren nach einem der vorhergehenden Ansprüche,
**dadurch gekennzeichnet, dass**
zum Verbiegen der Faden- oder Drahtpackung (24) der Drahtkern (22) mittels einer ersten Halteeinrichtung gehalten wird und ein von dem Drahtkern (22) beabstandeter Teilbereich (16) der Faden- oder Drahtpackung (24) mittels einer zweiten Halteeinrichtung gehalten wird, wobei diese beiden Halteeinrichtung zum Erzeugen der Schrägstellung der Borsten relativ zueinander verschoben und/oder verdreht werden.

5. Verfahren nach einem der Ansprüche 1 bis 4,
**dadurch gekennzeichnet, dass**
als Bürstenrohling (20) ein Rohling bereitgestellt wird, bei welchem die metallische Faden- oder Drahtpackung (24) mit zwei gegenüberliegenden Endbereichen in oder an jeweils einem Drahtkern (22) befestigt ist, wobei zum Verbiegen der Faden- oder Drahtpackung (24) die Drahtkerne (22) des Bürstenrohlings (20) jeweils mittels einer Halteeinrichtung gehalten werden und die jeweiligen Halteeinrichtungen zum Erzeugen der Schrägstellung der Borsten relativ zueinander verschoben und/oder verdreht werden.

6. Verfahren nach Anspruch 5,
**dadurch gekennzeichnet, dass**
nach dem Verbiegen die Faden- oder Drahtpackung (24) zwischen den beiden Drahtkernen (22) durchtrennt wird.

7. Verfahren nach einem der vorhergehenden Ansprüche,
**dadurch gekennzeichnet, dass**
beim konduktiven lokalen Aufwärmen des Drahtkerns (22) der an den Drahtkern (22) angrenzende Teilbereich (16) der Faden- oder Drahtpackung (24) mittels Wärmeleitung vom Drahtkern (22) erwärmt wird.

8. Verfahren nach einem der vorhergehenden Ansprüche,
**dadurch gekennzeichnet, dass**
der Drahtkern (22) als C-förmiges Element, insbesondere als C-Rohr, bereitgestellt wird und die Faden- oder Drahtpackung (24) zumindest am Austritt aus dem C-Rohr konduktiv und/oder durch Wärmeleitung erwärmt wird.

9. Vorrichtung (18) zum Herstellen von einer Bürstendichtung mit schräg gestellten Borsten aus einem Bürstenrohling (20) mit wenigstens einem Drahtkern (22) und mit wenigstens einer in oder an dem Drahtkern (22) befestigten Faden- oder Drahtpackung (24), welche mindestens eine Biegeeinrichtung (26) zum Verbiegen der Faden- oder Drahtpackung (24) relativ zu dem Drahtkern (22) umfasst, **gekennzeichnet durch** mindestens eine Heizeinrichtung (32) zum zumindest teilweisen lokalen konduktiven Aufwärmen wenigstens des Drahtkerns (22) und/oder eines an den Drahtkern (22) angrenzenden Teilbereichs (16) der Faden- oder Drahtpackung (24) mittels eines Stromflusses.

10. Vorrichtung (18) nach Anspruch 9,
**dadurch gekennzeichnet, dass**
die Biegeeinrichtung (26) jeweilige keramische Befestigungselemente (28) zum Halten von Drahtkernen (22) und/oder Faden- oder Drahtpackungen (24) des Bürstenrohlings (20) umfasst.

11. Vorrichtung (18) nach Anspruch 10,
**dadurch gekennzeichnet, dass**
die jeweiligen Befestigungselemente (28) der Biegeeinrichtung (26) entlang einer Führung (30) relativ zueinander verschiebbar und/oder verdrehbar sind.

12. Vorrichtung (18) nach einem der Ansprüche 9 bis 11,
**dadurch gekennzeichnet, dass**
die Heizeinrichtung (32) wenigstens zwei Kontaktelemente (12) zum elektrischen Kontaktieren einer Stromquelle mit dem wenigstens einen Drahtkern (22) umfasst.

13. Vorrichtung (18) nach einem der Ansprüche 9 bis 12,
**dadurch gekennzeichnet, dass**
die Heizeinrichtung (32) und die Biegeeinrichtung (26) als voneinander funktional unabhängige Einrichtungen ausgebildet sind.

## Claims

1. Method for producing a brush seal having inclined bristles, comprising at least the following steps:
- providing a brush blank (20) with at least one metal thread or wire pack (24) which is fastened at or in at least one wire core (22);
- locally at least partially heating at least the wire core (22) and/or a portion (16) of the thread or wire pack (24) that adjoins the wire core (22);
- bending the thread or wire pack (24) relative to the wire core (22) to create the inclined position of the bristles of the brush seal,
**characterized in that** the wire core (22) and/or the portion (16) of the thread or wire pack (24) that adjoins the wire core (22) is heated locally, at least in part in a conductive manner, by means of a current flow through the wire core (22).

2. Method according to claim 1, **characterized in that**, for local heating, two poles of a current source are brought into electrical contact, at two spaced points, with the wire core (22) and/or with the thread or wire pack (24) by means of respective contact elements (12).

3. Method according to either claim 1 or claim 2, **characterized in that** an alternating current and/or a direct current is used for local conductive heating.

4. Method according to any of the preceding claims, **characterized in that**, for bending the thread or wire pack (24), the wire core (22) is held by means of a first holding device and a portion (16) of the thread or wire pack (24) that is spaced from the wire core (22) is held by means of a second holding device, said two holding devices being shifted and/or rotated relative to one another in order to create the inclined position of the bristles.

5. Method according to any of claims 1 to 4, **characterized in that** a blank is provided as the brush blank (20), in which blank the metal thread or wire pack (24) is fastened to two opposite end regions, in each case in or at a wire core (22), the wire cores (22) of the brush blank (20), for bending the thread or wire pack (24), each being held by means of a holding device and the respective holding devices being shifted and/or rotated relative to one another in order to create the inclined position of the bristles.

6. Method according to claim 5, **characterized in that**, after the bending, the thread or wire pack (24) is severed between the two wire cores (22).

7. Method according to any of the preceding claims, **characterized in that**, during the conductive local heating of the wire core (22), the portion (16) of the thread or wire pack (24) that adjoins the wire core (22) is heated by means of heat conduction of the wire core (22).

8. Method according to any of the preceding claims, **characterized in that** the wire core (22) is provided as a C-shaped element, in particular as a C-tube, and the thread or wire pack (24) is heated conductively and/or by means of heat conduction at least at the outlet from the C-tube.

9. Apparatus (18) for producing a brush seal having inclined bristles from a brush blank (20) which has at least one wire core (22) and at least one thread or wire pack (24) fastened in or at the wire core (22), which apparatus comprises at least one bending device (26) for bending the thread or wire pack (24) relative to the wire core (22), **characterized by** at least one heating device (32) for at least partially locally conductively heating, by means of a current flow, at least the wire core (22) and/or a portion (16) of the thread or wire pack (24) that adjoins the wire core (22).

10. Apparatus (18) according to claim 9, **characterized in that** the bending device (26) comprises respective ceramic fastening elements (28) for holding wire cores (22) and/or thread or wire packs (24) of the brush blank (20).

11. Apparatus (18) according to claim 10, **characterized in that** the respective fastening elements (28) of the bending device (26) are shiftable and/or rotatable relative to one another along a guide (30).

12. Apparatus (18) according to any of claims 9 to 11, **characterized in that** the heating device (32) comprises at least two contact elements (12) for electrically contacting a current source by means of the at least one wire core (22).

13. Apparatus (18) according to any of claims 9 to 12, **characterized in that** the heating device (32) and the bending device (26) are designed as functionally independent devices.

## Revendications

1. Procédé de production d'un joint-brosse d'étanchéité comportant des soies obliques, comprenant au moins les étapes :
- de fourniture d'une ébauche de brosse (20) comportant au moins un filament ou un paquet de fils métalliques (24) fixé à au moins un noyau de fil (22) ou dans celui-ci ;
- de chauffage local au moins partiel au moins du noyau de fil (22) et/ou d'une zone partielle (16) du filament ou du paquet de fils (24) adjacent au noyau de fil (22) ;
- de cintrage du filament ou du paquet de fils (24) par rapport au noyau de fil (22) pour produire la position oblique des soies du joint-brosse d'étanchéité, **caractérisé en ce que** le noyau de fil (22) et/ou la zone partielle (16) du filament ou du paquet de fils (24) adjacente au noyau de fil (22) est au moins partiellement chauffée localement de manière conductrice au moyen d'un flux de courant par le noyau de fil (22).

2. Procédé selon la revendication 1, **caractérisé en ce que**, pour le chauffage local, deux pôles d'une source de courant sont mis en contact électrique en deux points espacés l'un de l'autre avec le noyau de fil (22) et/ou avec le filament ou le paquet de fils (24) au moyen d'éléments de contact (12) respectifs.

3. Procédé selon l'une des revendications 1 ou 2, **caractérisé en ce qu'**un courant alternatif et/ou un courant continu est utilisé pour le chauffage local par conduction.

4. Procédé selon l'une des revendications précédentes, **caractérisé en ce que**, pour le cintrage du filament ou du paquet de fils (24), le noyau de fil (22) est maintenu au moyen d'un premier dispositif de retenue et une zone partielle (16) du filament ou du paquet de fils (24) espacée du noyau de fil (22) est maintenue au moyen d'un second dispositif de retenue, dans lequel lesdits deux dispositifs de retenue sont déplacés et/ou tournés l'un par rapport à l'autre pour produire la position oblique des soies.

5. Procédé selon l'une des revendications 1 à 4, **caractérisé en ce qu'**une ébauche sous forme d'ébauche de brosse (20) est prévue, dans laquelle ébauche le filament ou le paquet de fils (24) est fixé par deux zones d'extrémité opposées respectivement dans un noyau de fil (22) ou à celui-ci, dans lequel les noyaux de fils (22) de l'ébauche de brosse (20) sont maintenus respectivement au moyen d'un dispositif de retenue pour le cintrage du filament ou du paquet de fils (24) et les dispositifs de retenue respectifs sont déplacés et/ou tournés les uns par rapport aux autres pour produire la position oblique des soies.

6. Procédé selon la revendication 5, **caractérisé en ce que**, après cintrage, le filament ou le paquet de fils (24) est coupé entre les deux noyaux de fils (22).

7. Procédé selon l'une des revendications précédentes, **caractérisé en ce que**, lors du chauffage local par conduction du noyau de fil (22), la zone partielle (16) du filament ou du paquet de fils (24) adjacente au noyau de fil (22) est chauffée par conduction thermique par le noyau de fil (22).

8. Procédé selon l'une des revendications précédentes, **caractérisé en ce que** le noyau de fil (22) est réalisé sous la forme d'un élément en C, en particulier sous la forme d'un tube en C, et le filament ou le paquet de fils (24) est chauffé de manière conductrice et/ou par conduction thermique au moins au niveau de la sortie du tube en C.

9. Dispositif (18) de production d'un joint-brosse d'étanchéité comportant des soies obliques à partir d'une ébauche de brosse (20) comportant au moins un noyau de fil (22) et au moins un filament ou un paquet de fils (24) fixé dans le noyau de fil (22) ou à celui-ci, lequel filament ou paquet de fils comprend au moins un dispositif de cintrage (26) pour le cintrage du filament ou le paquet de fils (24) par rapport au noyau de fil (22), **caractérisé par** au moins un dispositif de chauffage (32) pour le chauffage au moins partiellement conducteur localement au moins du noyau de fil (22) et/ou d'une zone partielle (16) du filament ou du paquet de fils (24) adjacente au noyau de fil (22) au moyen d'un flux de courant

10. Dispositif (18) selon la revendication 9, **caractérisé en ce que** le dispositif de cintrage (26) comprend des éléments de fixation (28) en céramique respectifs pour le maintien des noyaux de fils (22) et/ou du filament ou des paquets de fils (24) de l'ébauche de brosse (20).

11. Dispositif (18) selon la revendication 10, **caractérisé en ce que** les éléments de fixation (28) respectifs du dispositif de cintrage (26) sont déplaçables et/ou rotatifs les uns par rapport aux autres le long d'un guide (30).

12. Dispositif (18) selon l'une des revendications 9 à 11, **caractérisé en ce que** le dispositif de chauffage (32) comprend au moins deux éléments de contact (12) pour la mise en contact électrique d'une source de courant avec l'au moins un noyau de fil (22).

13. Dispositif (18) selon l'une des revendications 9 à 12, **caractérisé en ce que** le dispositif de chauffage (32) et le dispositif de cintrage (26) sont réalisés sous forme de dispositifs fonctionnellement indépendants.
